# EUROPEAN PATENT SPECIFICATION

(11) **EP 4 249 866 B1**
(45) Date of publication and mention of the grant of the patent: **03.09.2025**
(21) Application number: 23163360.3
(22) Date of filing: 22.03.2023
(51) Int. Cl.: G02B 5/18, G02B 26/08, G01J 3/02, G01J 3/20, G01J 3/04, G02B 7/182

(54) **SPECTROSCOPE AND ANALYSIS SYSTEM**
SPEKTROSKOP UND ANALYSESYSTEM
SPECTROSCOPE ET SYSTÈME D'ANALYSE

(30) Priority: 23.03.2022 JP 2022047143; 27.01.2023 JP 2023011088
(43) Date of publication of application: 27.09.2023
(73) Proprietor: Ricoh Company, Ltd., Tokyo 143-8555 (JP)
(72) Inventor: TATEBE, Tetsuroh, Tokyo (JP); NOGUCHI, Hidetaka, Tokyo (JP); TOKITA, Toshiaki, Tokyo (JP)
(74) Representative: SSM Sandmair

(56) References cited:
- DE-A1- 19 955 759
- US-A1- 2009 284 740
- US-A1- 2010 278 543
- US-B1- 10 444 073

## Description

### BACKGROUND

### Technical Field

The present disclosure relates to a spectroscope and an analysis system.

### Related Art

In related art, a spectroscope that disperses measurement light to obtain an optical spectrum on a wavelength basis is known. Such a spectroscope is used in various applications such as an application of determining the material of plastic for recycling resources.

For example, a spectroscope described in Japanese Unexamined Patent Application Publication No. 2013-109082 includes a rotatable diffraction grating and rotatable reflecting means. The spectroscope corrects a deviation of the optical-axis in a direction intersecting with the optical-axis, the deviation which is generated when the diffraction grating is rotated to increase diffraction efficiency, by rotation of the reflecting means.

However, the spectroscope may vary in accordance with a dimensional tolerance or an assembly tolerance of a component. The above-described spectroscope corrects a deviation of the optical-axis in the direction intersecting with the optical-axis; however does not correct a deviation of the focus position or the like of emission light emitted from the spectroscope in the optical-axis direction.

DE 199 55 759 A1 discloses a spectroscope with a diffraction grating for dispersing incident light and a micromechanical tiltable mirror.

US 10,444,073 B1 discloses a frame, a spectroscope, a spectrometry unit, and an image forming apparatus. The frame has hollow structure and includes at least four apertures including a first aperture, a second aperture, a third aperture through which light enters the frame, and a fourth aperture, a concave diffraction grating disposed at a position of the first aperture, and a movable reflector disposed at a position of the second aperture to reflect light dispersed by the concave diffraction grating and change a reflection angle of the reflected light. Through the fourth aperture of the frame, the light reflected by the movable reflector exits the frame. The spectroscope includes the frame, and the frame further includes an optical entrance disposed at a position of the third aperture, and an optical exit disposed at a position of the fourth aperture.

US 2010/0278543 A1 discloses a spectral colorimetric apparatus for detecting a color of an image of a subject, including: an illumination optical system illuminating the subject on a detection surface; a spectral optical system including a spectral element spectrally separating the beam diffused by the subject and a light receiving element array detecting a spectral intensity distribution; and a guiding optical system for guiding a beam diffused by the subject, wherein: the detection surface is parallel to a spectral plane including a principal ray of a beam entering the spectral optical system and a principal ray of a beam spectrally separated; the principal ray of the beam enters the spectral optical system within the spectral plane obliquely to a line joining a center of the light receiving element array with a surface vertex of the spectral element; and a light receiving surface of the light receiving element array is orthogonal to the spectral plane.
US 2009/0284740 A1 discloses spectrometer optics with a beam path from a beam source to a number of electro-optical sensors without spatial resolution, the beam path comprising an entry slot, a dispersive element, and a number of exit slots arranged on a focal curve, wherein furthermore: a first actuator for changing the angle of incidence ε between the beam from the entry slot to the dispersive element and from the normal to the dispersive element; a number of second actuators for moving the exit slots tangentially with respect to the focal curve or in a peripheral direction along the focal curve and a controller which is adapted to control the first actuator and the second actuators to carry out a calibration is provided.

### SUMMARY

Embodiments of the present disclosure provide a spectroscope as defined in independent claim 1. Preferred embodiments are defined in the dependent claims.

Embodiments of the present disclosure provide an analysis system including the spectroscope; and a processor that analyzes a spectrum obtained by the spectroscope.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a perspective view illustrating a general arrangement of a spectroscope according to a first embodiment;
FIG. 2 is a cross-sectional view illustrating a Rowland circle in the spectroscope in FIG. 1;
FIG. 3 is a cross-sectional view taken along line III-III in FIG. 1;
FIGs. 4A, 4B, 4C, 4D, 4E, and 4F are views each illustrating a configuration for a positional change according to the first embodiment, FIG. 4A being a top view of a first example, FIG. 4B being a front view of the first example, FIG. 4C being a top view of a second example, FIG. 4D being a front view of the second example, FIG. 4E being a top view of a third example, FIG. 4F being a front view of the third example;
FIG. 5 is a graph presenting an example of an optical spectrum near a wavelength λ1;
FIG. 6A is a graph presenting an example of optical spectra near wavelengths λ1, λ2, and λ3;
FIG. 6B is a diagram illustrating a relationship example between a diffraction angle when light having each wavelength dispersed by a concave diffraction grating is reflected by a movable light reflector and an angle at which the light is reflected by the movable light reflector;
FIG. 6C is a graph presenting an example of angles of the movable light reflector when light having each wavelength passes through a second light passing portion with the highest light intensity in a case where predetermined tolerances are given to the position and posture of each of the concave diffraction grating, the movable light reflector, and a light emitter;
FIG. 6D is a graph presenting an example of values of full width at half maximum of light illuminance when light having each wavelength passes through the second light passing portion with the highest light intensity in a case where predetermined tolerances are given to the position and posture of each of the concave diffraction grating, the movable light reflector, and the light emitter;
FIG. 7 is a diagram illustrating an example of positional changes of the concave diffraction grating and the light emitter;
FIG. 8 is a view illustrating an example of a grating of the concave diffraction grating;
FIGs. 9A, 9B, and 9C are views each illustrating a change in focus position of emission light when the position of the concave diffraction grating is changed, FIG. 9A illustrating a first example, FIG. 9B illustrating a second example, FIG. 9C illustrating a third example;
FIG. 10 is a diagram illustrating an example of a positional change of a light incidence section;
FIG. 11 is a diagram illustrating an example of a positional change of the movable light reflector;
FIG. 12 is a diagram illustrating an example of changing the positions of the light incidence section, the concave diffraction grating, the movable light reflector, and the light emitter;
FIG. 13 is a cross-sectional view illustrating an example of an angle adjustment mechanism of the concave diffraction grating;
FIG. 14 is a bottom view illustrating the example of the angle adjustment mechanism of the concave diffraction grating;
FIG. 15 is a cross-sectional view illustrating another example of the angle adjustment mechanism of the concave diffraction grating;
FIG. 16 is a bottom view illustrating the other example of the angle adjustment mechanism of the concave diffraction grating;
FIG. 17 is a graph presenting an example of angles of the movable light reflector in a case where predetermined tolerances are given to the position and posture of each of the concave diffraction grating, the movable light reflector, and the light emitter and the position of the concave diffraction grating is adjusted;
FIG. 18 is a graph presenting an example of values of full width at half maximum of light illuminance when light having each wavelength passes through the second light passing portion with the highest light intensity in a case where predetermined tolerances are given to the position and posture of each of the concave diffraction grating, the movable light reflector, and the light emitter and the position of the light emitter is adjusted;
FIG. 19 is a graph presenting an example of values of full width at half maximum of light illuminance when light having each wavelength passes through the second light passing portion with the highest light intensity in a case where predetermined tolerances are given to the position and posture of each of the concave diffraction grating, the movable light reflector, and the light emitter and the positions of the concave diffraction grating and the light emitter are adjusted simultaneously;
FIG. 20 is a graph presenting an example of angles of the movable light reflector in a case where predetermined tolerances are given to the position and posture of each of the concave diffraction grating, the movable light reflector, and the light emitter and the posture of the concave diffraction grating is adjusted;
FIG. 21 is a diagram illustrating a general arrangement of an analysis system according to a second embodiment; and
FIG. 22 is a flowchart presenting an example of a resin determination operation when the analysis system according to the second embodiment is applied to a resin determination apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

Embodiments for implementing the present disclosure are described below in detail referring to the drawings. Like reference signs are applied to identical or corresponding components throughout the drawings and redundant description thereof may be omitted where appropriate.

The embodiment described below is illustrative of a spectroscope for embodying the technical idea of the present disclosure, and the present disclosure is not limited to the embodiment described below. The dimensions, materials, shapes, relative arrangements, and so forth, of the components described below are not intended to limit the scope of the present disclosure thereto, and are intended to be examples unless otherwise specifically indicated. The size, positional relationship, and so forth, of members illustrated in the drawings may be exaggerated for clarity of description.

### First Embodiment

### Example of General Arrangement of Spectroscope 10

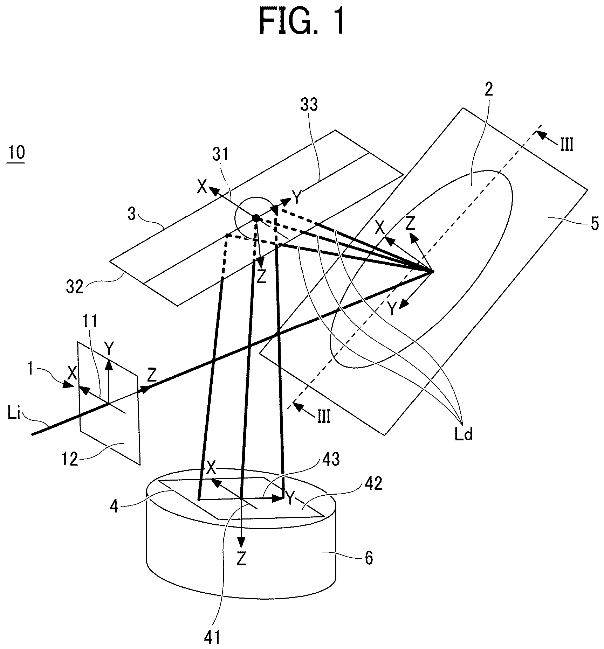

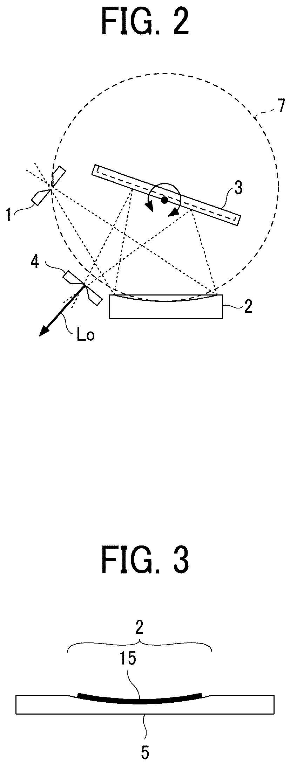

A configuration of a spectroscope 10 according to a first embodiment is described referring to FIGs. 1 and 2. FIG. 1 is a perspective view illustrating a general arrangement of the spectroscope 10. FIG. 2 is a cross-sectional view illustrating a Rowland circle 7 in the spectroscope 10.

As illustrated in FIGs. 1 and 2, the spectroscope 10 includes a light incidence section 1, a concave diffraction grating 2, a movable light reflector 3, a light emitter 4, a substrate 5, and a light detector 6. FIG. 1 also indicates a local coordinate system of each component.

The light incidence section 1 is an example of light incidence means that allows light Li from the outside to be incident. The light incidence section 1 allows the light Li from the outside to be incident on the spectroscope 10 through a first light passing portion 11. A region of the light incidence section 1 other than the first light passing portion 11 defines a first light non-passing portion 12 that does not allow the light Li to pass therethrough. The first light passing portion 11 has, for example, a pinhole shape or a slit shape, and is provided to determine the incident position of light and to increase the wavelength resolution.

The concave diffraction grating 2 is an example of a diffraction grating that disperses the wavelengths of the light Li incident on the concave diffraction grating 2 by the light incidence section 1. The concave diffraction grating 2 is formed on the substrate 5. The concave diffraction grating 2 diffracts the light Li to disperse the wavelengths of the light Li, and reflects wavelength dispersed light Ld toward the movable light reflector 3. Beams of light having different wavelengths included in the wavelength dispersed light Ld propagate while being converged, are incident at different positions on a reflection line 33 on a reflecting surface 32, and are reflected by the reflecting surface 32.

The material of the substrate 5 may be, but is not limited to, for example, a semiconductor, a glass, a metal, or a resin. The concave diffraction grating 2 may be directly formed on the substrate 5, or may be formed on a thin film layer, for example, a resin layer, formed on the substrate 5.

The movable light reflector 3 is an example of reflecting means having the reflecting surface 32 whose inclination is variable. The movable light reflector 3 reflects the wavelength dispersed light Ld caused by the concave diffraction grating 2 toward the light emitter 4 by the reflecting surface 32.

The movable light reflector 3 has a swing axis 31. The movable light reflector 3 swings around the swing axis 31 to change the inclination of the reflecting surface 32 that reflects the wavelength dispersed light Ld. Scanning with the wavelength dispersed light Ld is performed in accordance with the inclination of the reflecting surface 32.

The movable light reflector 3 can be formed in a thin and small shape on a semiconductor substrate by, for example, a semiconductor process or a micro electro mechanical systems (MEMS) process. Since the movable light reflector 3 is formed on the semiconductor substrate, a driving element section for piezoelectric driving, electrostatic driving, electromagnetic driving, or the like, can be monolithically formed on the semiconductor substrate. Thus, the spectroscope 10 can drive the movable light reflector 3 without using an external driving device such as a motor, thereby attaining a further decrease in size. However, the substrate on which the movable light reflector 3 is formed is not limited to a semiconductor, and may be a glass, a metal, a resin, or the like.

The light emitter 4 is an example of light emitting means that emits, to the outside through a second light passing portion 41, part of the beams of light having the different wavelengths included in the wavelength dispersed light Ld reflected by the movable light reflector 3. The part of the beams of light having the different wavelengths included in the wavelength dispersed light Ld is emitted to the outside through the second light passing portion 41. A region of the light emitter 4 other than the second light passing portion 41 defines a second light non-passing portion 42 that does not allow the wavelength dispersed light Ld to pass therethrough.

The second light passing portion 41 has, for example, a pinhole shape or a slit shape, and is provided to determine the emission position of the part of the beams of light having the different wavelengths included in the wavelength dispersed light Ld and to increase the wavelength resolution.

The beams of light having the different wavelengths included in the wavelength dispersed light Ld are reflected at different positions on the reflection line 33 on the reflecting surface 32 and are incident at different positions on an emission line 43 on the light emitter 4.

Since the reflecting surface 32 of the movable light reflector 3 changes the inclination around the swing axis 31, the incident position on the emission line 43 of each of the beams of light having the different wavelengths included in the wavelength dispersed light Ld changes.

Among the beams of light having the different wavelengths included in the wavelength dispersed light Ld, light incident on the position of the second light passing portion 41 passes through the second light passing portion 41 and is emitted. The light emitter 4 can emit light having a wavelength included in the wavelength dispersed light Ld and determined by the swing angle of the movable light reflector 3 through the second light passing portion 41. Emission light Lo illustrated in FIG. 2 represents light emitted from the light emitter 4.

The light incidence section 1 and the light emitter 4 each may be formed on a substrate. In this case, the material of the substrate may be, but is not limited to, for example, a semiconductor, a glass, a metal, or a resin. However, it is desirable to use a semiconductor as the material of the substrate because the light incidence section 1 and the light emitter 4 can be formed with high precision and at low cost using a semiconductor process, a MEMS process, or the like.

The light detector 6 is an example of light detecting means that detects the emission light Lo from the light emitter 4. The light detector 6 may use, for example, a photodiode. When light Li in a near infrared region is dispersed, an indium gallium arsenide (InGaAs) photodiode is desirable.

In the spectroscope 10, the above-described components are disposed at predetermined positions as illustrated in FIG. 1, and are secured to a housing, a jig, or the like, so as to maintain predetermined postures.

In FIG. 2, a circle indicated by a broken line represents a Rowland circle 7. A Rowland circle is a circle having a diameter of a line connecting the center of curvature of the concave diffraction grating 2 and the center of a concave curved surface included in the concave diffraction grating 2. In the present embodiment, at least the light incidence section 1 and the concave diffraction grating 2 are disposed on the Rowland circle 7. The light emitter 4 is arranged on the Rowland circle 7 depending on the arrangement of the movable light reflector 3; however, FIG. 1 illustrates a configuration in which the light emitter 4 is not arranged on the Rowland circle 7 as an example.

### Example of Configuration of Concave Diffraction Grating 2

FIG. 3 illustrates a configuration of the concave diffraction grating 2, and is a cross-sectional view taken along line III-III in FIG. 1.

As illustrated in FIG. 3, the concave diffraction grating 2 includes a reflecting member 15. Specifically, a concave curved surface is formed in an upper surface of the substrate 5, and a diffraction grating is formed on the concave curved surface. Furthermore, the reflecting member 15 using a metal material, such as aluminum (Al), silver (Ag), gold (Au), or platinum (Pt), for increasing the reflectivity is formed on a surface of the diffraction grating. For example, a resist is applied to the concave curved surface of the substrate 5, a grating pattern is formed in the resist using an interference exposure method or the like, and dry etching or the like is performed, thereby forming a diffraction grating on the concave curved surface of the substrate 5.

The concave diffraction grating 2 may have, for example, a rectangular shape, a sine wave shape, or a sawtooth wave shape as the sectional shape of the groove portion of the diffraction grating.

The concave diffraction grating 2 does not have to include the reflecting member 15. The configuration of the concave diffraction grating 2 is not limited to the one illustrated in FIG. 3 as long as the concave diffraction grating 2 has a similar wavelength dispersion function. When parallel light is incident from the light incidence section 1, a plane diffraction grating may be used instead of the concave diffraction grating 2 to obtain a similar wavelength dispersion function. In this case, a complicated device configuration (for example, a collimator optical system for converting light into parallel light at a position in front or rear of the plane diffraction grating) is not used, while the complicated device is used when a configuration that changes the inclination of the plane diffraction grating is employed.

In the concave diffraction grating 2, a resin layer in a thin film form may be formed on the concave curved surface formed in the upper surface of the substrate 5, and a diffraction grating may be formed in the resin layer. In this case, to increase the reflectivity, a reflecting member made of a metal material, such as Al, Ag, Au, or Pt, is desirably formed on a surface of the diffraction grating formed in the resin layer.

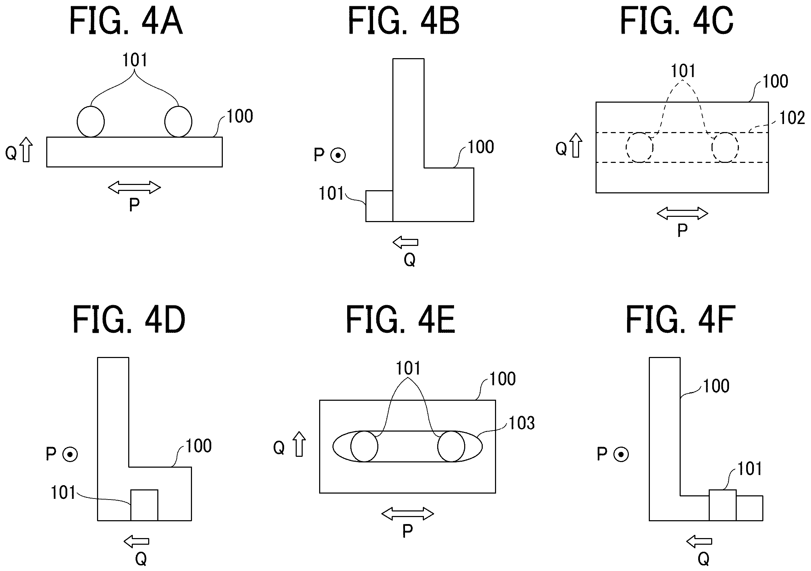

FIGs. 4A to 4F each illustrate a configuration for a positional change according to the present embodiment. FIG. 4A is a top view of a first example. FIG. 4B is a front view of the first example. FIG. 4C is a top view of a second example. FIG. 4D is a front view of the second example. FIG. 4E is a top view of a third example. FIG. 4F is a front view of the third example.

The spectroscope 10 includes a holder 100 and two positioning pins 101 as a configuration for changing the position of each of the light incidence section 1, the concave diffraction grating 2, the movable light reflector 3, and the light emitter 4.

In FIGs. 4A to 4F, the top view is a view of the holder 100 and the positioning pins 101 in a direction orthogonal to each of a direction indicated by arrow P and a direction indicated by arrow Q. The direction indicated by arrow P is a direction in which the holder 100 slides to change its position. The direction indicated by arrow Q is a direction in which the holder 100 comes into contact with the positioning pins 101. The front view is a view of the holder 100 and the positioning pins 101 in the direction indicated by arrow P.

The configurations of the holder 100 and the two positioning pins 101 can be appropriately changed in accordance with the position and shape of each of the light incidence section 1, the concave diffraction grating 2, the movable light reflector 3, and the light emitter 4 to which the holder 100 and the two positioning pins 101 are applied. FIGs. 4A and 4B illustrate a first example. FIGs. 4C and 4D illustrate a second example. FIGs. 4E and 4F illustrate a third example.

In the first example, a side surface (a surface orthogonal to the direction indicated by arrow Q) of a holder 100 comes into contact with positioning pins 101, and hence the holder 100 is positioned in the direction indicated by arrow Q. In this state, the position of the holder 100 can be changed in the direction indicated by arrow P.

In the second example, positioning pins 101 enter a groove 102 formed in a bottom surface (a surface opposite to an upper surface) of the holder 100 to position the holder 100 in the direction indicated by arrow Q. In this state, the position of the holder 100 can be changed in the direction indicated by arrow P.

In the third example, positioning pins 101 enter a long hole 103 formed in a bottom surface of a holder 100 to position the holder 100 in the direction indicated by arrow Q. In this state, the position of the holder 100 can be changed in the direction indicated by arrow P. The long hole 103 may be a hole extending through the holder 100 or may be a hole not extending through the holder 100 in a direction orthogonal to each of the direction indicated by arrow P and the direction indicated by arrow Q.

### Example of Optical Spectrum by Spectroscope 10

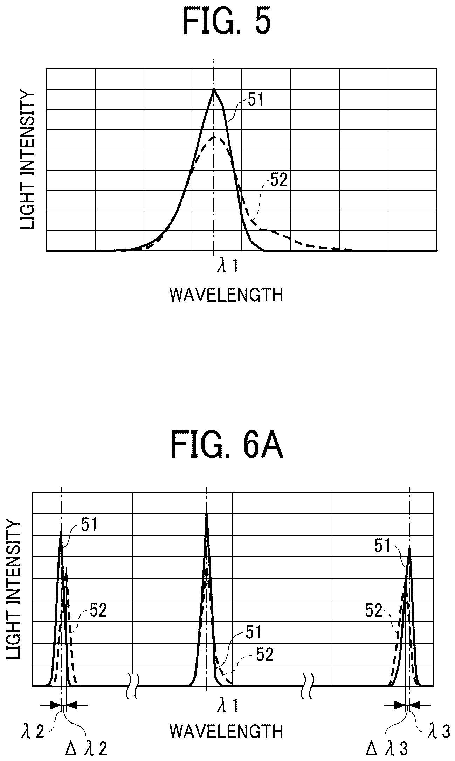

An optical spectrum by the spectroscope 10 is described referring to FIGs. 5 and 6A. FIG. 5 is a graph presenting an optical spectrum near a wavelength λ1. FIG. 6A is a graph presenting optical spectra near wavelengths λ1, λ2, and λ3. As illustrated in FIGs. 5 and 6A, the optical spectrum represents a light intensity on a wavelength basis.

A graph 51 with a solid line indicates an optical spectrum in a state in which the focus position of the emission light Lo substantially matches the position of the second light passing portion 41 in the optical-axis direction of the emission light Lo. The peak wavelengths are λ1, λ2, and λ3. In contrast, a graph 52 with a broken line indicates an optical spectrum in a state in which the focus position of the emission light Lo does not match the position of the second light passing portion 41 in the optical-axis direction of the emission light Lo. The peak wavelengths are λ1', λ2', and λ3'. The positional deviation in the optical-axis direction of the emission light Lo between the focus position of the emission light Lo and the position of the second light passing portion 41 is hereinafter referred to as a deviation in the optical-axis direction. Also, hereinafter, when the peak wavelength changes due to a positional variation or the like from the normal state, such as λ1' for λ1, λ2' for λ2, and λ3' for λ3, the phenomenon is referred to as a wavelength shift, and the differences (λ1' - λ1, λ2' - λ2, λ3' - λ3) are referred to as wavelength shift amounts.

As indicated by the graph 52 in FIG. 5, when there is a deviation in the optical-axis direction, the light intensity decreases and the half value width of the spectrum increases. The decrease in light intensity and the increase in half value width cause decreases in signal/noise (SN) ratio and wavelength resolution in spectral diffraction, and a decrease in performance of the spectroscope 10. Such a deviation in the optical-axis direction is generated in accordance with a dimensional error or an assembly error of each of the components such as the light incidence section 1, the concave diffraction grating 2, the movable light reflector 3, and the light emitter 4. Even when the spectroscope 10 is manufactured within the tolerance range, a deviation in the optical-axis direction may occur due to an error within a range of dimensional tolerance or assembly tolerance of each component.

As presented in FIG. 6A, when beams of light having the three wavelengths λ1, λ2, and λ3 have deviations in the optical-axis direction, a wavelength shift Δλ2 is generated for the wavelength λ2 that is separated from the wavelength λ1 near the center, and a wavelength shift Δλ3 is generated for the wavelength λ3 that is separated from the wavelength λ1 near the center. When the focus position and the position of the light emitter 4 are deviated from each other, the wavelength shift amount of λ1 near the center of the spectral wavelengths is small, whereas the wavelength shift amounts of λ2 and λ3 separated from the center of the spectral wavelengths are large. These wavelength shifts also cause a decrease in performance of the spectroscope 10.

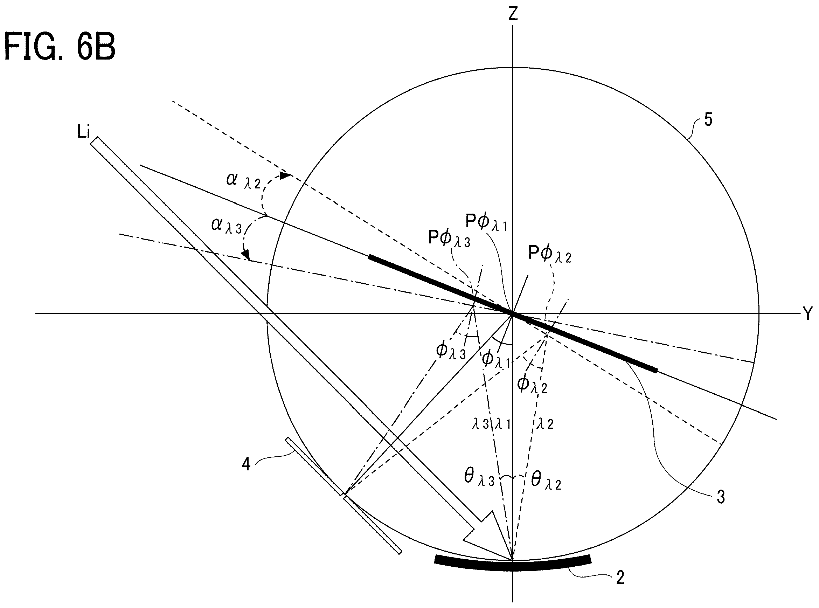

FIG. 6B illustrates a specific phenomenon. FIG. 6B is a diagram illustrating a relationship among diffraction angles θλ1, θλ2, and θλ3 when beams of light having the wavelengths λ1, λ2, and λ3 dispersed by the concave diffraction grating 2 are reflected by the movable light reflector 3, angles αλ1, αλ2, and αλ3 of the movable light reflector 3, and angles φλ1, φλ2, and φλ3 at which the beams of light are reflected by the movable light reflector 3 (in this case, representing the sum of the incident angle and the reflection angle). The beams of light having the wavelengths λ1, λ2, and λ3 represent principal rays. In FIG. 6B, light having the wavelength λ1 is indicated by a solid line, light having the wavelength λ2 is indicated by a broken line, and light having the wavelength λ3 is indicated by a one dot-chain line.

The diffraction angle is indicated as a rotation angle with respect to the normal direction (Z-axis direction) of the concave diffraction grating 2. It is assumed that the diffraction angle θλ1 coincides with the normal direction, that is, θλ1 = 0. The angle of the movable light reflector 3 is indicated while it is assumed that the angle under a condition that the light having the wavelength λ1 passes through the second light passing portion 41 is 0°, that is, αλ1 = 0. In an ideal state, θλ1 = αλ = 0, θλ2 = αλ2, and θλ3 = αλ3 are established, and φλ1 = φλ2 = φλ3 is established. As illustrated in FIG. 6B, the beams of light having the wavelengths are reflected at different positions Pλ1, Pλ2, and Pλ3 of the movable light reflector 3. Thus, for example, when the rotation axis of the movable light reflector 3 is deviated from an ideal position, for example, a position on the X-axis orthogonal to each of the Y-axis and the Z-axis illustrated in FIG. 6B, the beams of light having the wavelengths reach different positions. This is a disadvantage specific to a spectroscope using the movable light reflector 3.

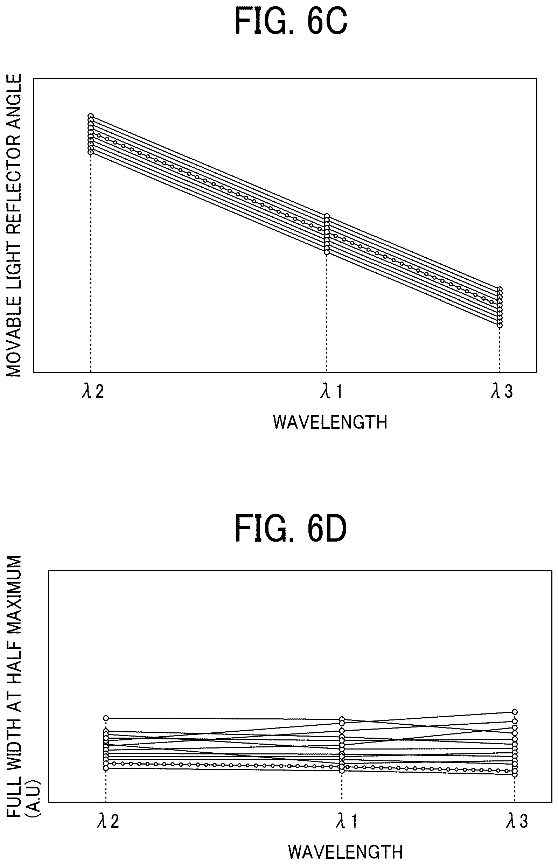

FIG. 6C presents angles of the movable light reflector 3 when light having each of the wavelengths λ1, λ2, and λ3 passes through the second light passing portion 41 with the highest light intensity in a case where predetermined tolerances are given to the position and posture of each element of the concave diffraction grating 2, the movable light reflector 3, and the light emitter 4. A dotted line indicates an angle of a design median value without a positional variation. The larger the difference in angle from the design median value, the larger the wavelength shift amount. The position of each element is adjusted to reduce the variation in angle.

FIG. 6D presents values of full width at half maximum of light illuminance when light having each of the wavelengths λ1, λ2, and λ3 passes through the second light passing portion 41 with the highest light intensity in a case where predetermined tolerances are given to the position and posture of each element of the concave diffraction grating 2, the movable light reflector 3, and the light emitter 4. A dotted line indicates a value of a design median value without a positional variation. The full width at half maximum increases with a variation in position from the design median value. The wavelength resolution may be defined as the reciprocal of the full width at half maximum.

As described above, to ensure the performance of the spectroscope 10 at a high level and to reduce the difference in performance between spectroscopes 10, it is desirable to reduce a deviation in the optical-axis direction.

### Example of Positional Changes of Concave Diffraction Grating 2 and Light Emitter 4

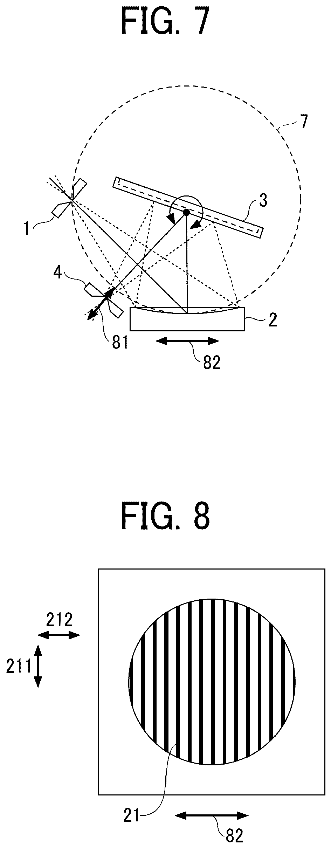

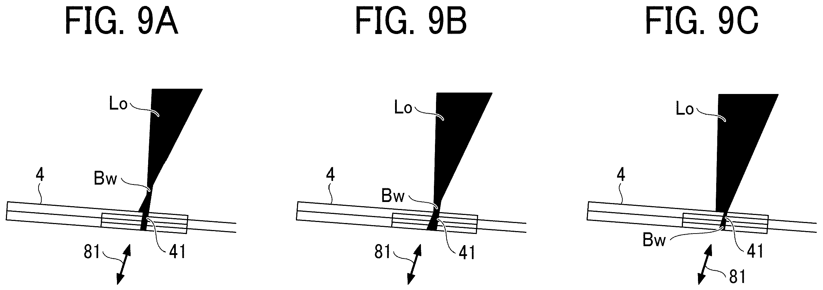

FIG. 7 is a diagram illustrating an example in accordance with the claimed invention of positional changes of the concave diffraction grating 2 and the light emitter 4. FIG. 8 is a view illustrating a grating 21 of the concave diffraction grating 2. FIGs. 9A, 9B, and 9C are views each illustrating a change in focus position of the emission light Lo when the position of the concave diffraction grating 2 is changed. FIG. 9A illustrates a first example. FIG. 9B illustrates a second example. FIG. 9C illustrates a third example.

In the present embodiment, as illustrated in FIG. 7, the position of the concave diffraction grating 2 can be changed in a first tangential direction 82 of the Rowland circle 7 near the position at which the concave diffraction grating 2 is disposed. As illustrated in FIG. 8, in the concave diffraction grating 2, a plurality of gratings 21 extending in an extension direction 211 are arranged in an arrangement direction 212. The arrangement direction 212 is an example of a predetermined direction in which the plurality of gratings 21 are arranged. The first tangential direction 82 is a direction in the arrangement direction 212, and is a direction substantially orthogonal to the extension direction 211.

Changing the position of the concave diffraction grating 2 in the first tangential direction 82 changes the incident angle of the light from the light incidence section 1 onto the concave diffraction grating 2. Thus, the focus position of the emission light Lo can be changed.

In FIG. 9A, a focus position Bw of the emission light Lo is located on the movable light reflector 3 side with respect to the second light passing portion 41 of the light emitter 4 in an optical-axis direction 81. In FIG. 9B, the second light passing portion 41 of the light emitter 4 and the focus position Bw of the emission light Lo substantially match each other in the optical-axis direction 81. In FIG. 9C, the focus position Bw of the emission light Lo is located on the side opposite to the movable light reflector 3 with respect to the second light passing portion 41 of the light emitter 4 in the optical-axis direction 81. Changing the position of the concave diffraction grating 2 in the first tangential direction 82 can change the position of the focus position Bw in the optical-axis direction 81 as illustrated in FIG. 9A to FIG. 9C. Thus, adjustment can be performed to substantially align the second light passing portion 41 and the focus position Bw with each other.

The direction in which the position of the concave diffraction grating 2 is changed is the longitudinal direction of the concave diffraction grating 2. Thus, two reference points can be set at positions apart from each other at the positional change, and a deviation of the concave diffraction grating 2 in the rotation direction around the grating direction due to the positional change can be suppressed.

In the present embodiment, as illustrated in FIG. 7, the position of the light emitter 4 is changeable in the optical-axis direction 81 of the emission light Lo emitted from the light emitter 4. The optical-axis direction 81 of the emission light Lo corresponds to a direction along the center axis of the emission light Lo. Changing the position of the light emitter 4 can provide adjustment to substantially align the second light passing portion 41 and the focus position Bw with each other.

Scanning with the emission light Lo is provided by the movable light reflector 3 in the spectroscope 10 in a direction intersecting with the optical-axis direction 81. Thus, the positional deviation of the focus position Bw in the direction intersecting with the optical-axis direction 81 does not affect the light intensity, wavelength resolution, and so forth, of the emission light Lo unless the positional deviation extremely varies, and hence the position of the light emitter 4 may be changed at least in the optical-axis direction 81.

The positional change of the light emitter 4 has a less influence on the optical characteristics other than the change in focus position Bw in the optical-axis direction 81 as compared to the positional changes of the other components in the spectroscope 10, and hence the adjustment to substantially align the focus position Bw and the second light passing portion 41 with each other can be stably performed.

As described above, in the present embodiment, the positions of the components in the spectroscope 10 can be adjusted. In the present embodiment, the position of the concave diffraction grating 2 is changed in the first tangential direction 82 of the Rowland circle 7, or the position of the light emitter 4 is changed in the optical-axis direction 81, thereby substantially aligning the focus position Bw of the emission light Lo with the position of the second light passing portion 41. Since the focus position Bw of the emission light Lo is substantially aligned with the position of the second light passing portion 41, an individual difference in performance of each spectroscope 10 can be reduced.

For example, the position of the light emitter 4 can be changed so that the focus position Bw of the emission light Lo to be emitted from the light emitter 4 overlaps the position at which the emission light Lo to be emitted from the light emitter 4 passes through the light emitter 4. The position of each of the concave diffraction grating 2 and the light emitter 4 may be changeable so that the light intensity of the emission light Lo from the light emitter 4 is maximized. The position of each of the concave diffraction grating 2 and the light emitter 4 may be changeable so that the wavelength resolution of the emission light Lo from the light emitter 4 is maximized. The position of each of the concave diffraction grating 2 and the light emitter 4 may be changeable so that the wavelength shift of the emission light Lo from the light emitter 4 is minimized. Furthermore, two or more of the above-described positional changes may be combined as appropriate. With any of the positional changes, an advantageous effect of reducing the individual difference in performance of each spectroscope 10 can be obtained.

### Example of Positional Change of Light Incidence Section 1

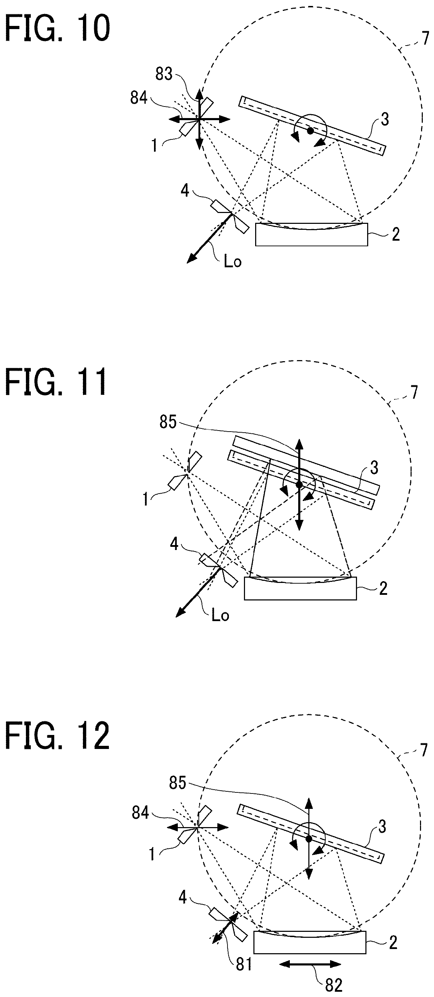

FIG. 10 is a diagram illustrating an example of a positional change of the light incidence section 1. When the position of the light incidence section 1 is changed in a second tangential direction 83 or a radial direction 84 of the Rowland circle 7 near the position at which the light incidence section 1 is disposed, the relative positions of the concave diffraction grating 2 and the light incidence section 1 are changed. Accordingly, an advantageous effect similar to that in the case where the position of the concave diffraction grating 2 is changed in the first tangential direction 82 can be obtained. Which one of the second tangential direction 83 and the radial direction 84 the position is changed along can be appropriately selected in accordance with the clearance with respect to another component, the space in which the position can be changed, and so forth.

### Example of Positional Change of Movable Light Reflector 3

FIG. 11 is a diagram illustrating an example of a positional change of the movable light reflector 3. As illustrated in FIG. 11, when the position of the movable light reflector 3 is changed in a direction away from the concave diffraction grating 2 in a movement direction 85, the focus position Bw of the emission light Lo changes to a position on the movable light reflector 3 side with respect to the light emitter 4. The movable light reflector 3 changes the position in the optical-axis direction of the light incident on the movable light reflector 3 to change the focus position Bw of the emission light Lo and to substantially align the focus position Bw with the position of the second light passing portion 41 of the light emitter 4. Example of Positional Changes of Light Incidence Section 1, Concave Diffraction Grating 2, Movable Light Reflector 3, and Light Emitter 4

FIG. 12 is a diagram illustrating an example in a state in which the position of each of the light incidence section 1, the concave diffraction grating 2, the movable light reflector 3, and the light emitter 4 is changeable. The positions of at least two of the light incidence section 1, the concave diffraction grating 2, the movable light reflector 3, and the light emitter 4 are changeable, and hence the focus position Bw can be substantially aligned with the position of the second light passing portion 41 of the light emitter 4 even when the dimensional tolerance, mounting tolerance, or assembly tolerance of each of the components is large. Accordingly, robustness with respect to a manufacturing error or the like of each component can be enhanced, performance of the spectroscope 10 can be highly ensured, and an individual difference of the spectroscope 10 can be reduced. In addition, the positions of the plurality of components can be changed, and hence the range of change in position per component can be decreased, thereby downsizing the spectroscope 10.

Each of the components in the spectroscope 10 including the light incidence section 1, the concave diffraction grating 2, the movable light reflector 3, and the light emitter 4 is secured in a housing or by a support so as to maintain the predetermined position and posture. Thus, the position of each of the components may be changed by changing the position of the support. There is no particular limitation on the system, shape, or the like, of the position change mechanism.

When the light detector 6 is installed near the light emitter 4, the position of the light emitter 4 can be changed simultaneously with the positional change of the light detector 6. By performing the positional changes simultaneously, a deviation in alignment between the light emitter 4 and the light detector 6 is not generated, and the optical characteristics of the spectroscope 10 can be stabilized.

### Example of Angle Adjustment Mechanism of Concave Diffraction Grating 2

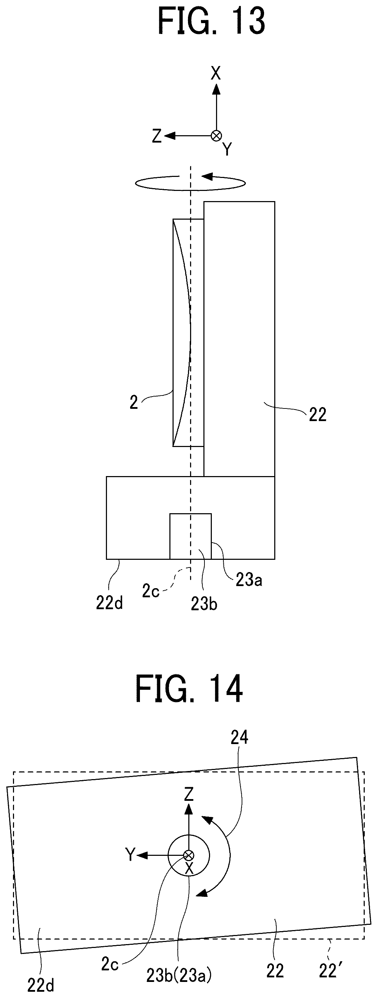

FIGs. 13 and 14 are views illustrating an example of an angle adjustment mechanism 22 of the concave diffraction grating 2. FIG. 13 is a cross-sectional view, and FIG. 14 is a bottom view. As illustrated in FIGs. 13 and 14, the angle adjustment mechanism 22 has a recessed portion 23a in a lower surface 22d. The recessed portion 23a is fitted to a positioning pin 23b having a columnar shape. The positioning pin 23b has a columnar shaft that is substantially parallel to the vertical direction, and substantially coincides with a rotation axis 2c of the angle adjustment mechanism 22.

The angle adjustment mechanism 22 swings around the rotation axis 2c (in a direction indicated by arrow 24) to swing the concave diffraction grating 2 held by the angle adjustment mechanism 22 around the rotation axis 2c. An angle adjustment mechanism 22' in FIG. 14 represents an angle adjustment mechanism before the swing, and the angle adjustment mechanism 22 represents an angle adjustment mechanism after the swing by a predetermined rotation angle around the rotation axis 2c from the state of the angle adjustment mechanism 22'.

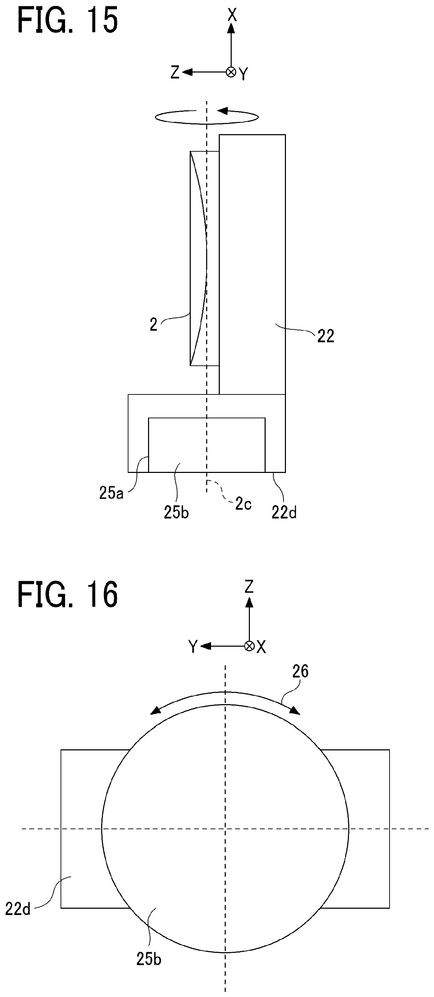

FIGs. 15 and 16 illustrate another example of the angle adjustment mechanism of the concave diffraction grating 2. FIG. 15 is a cross-sectional view, and FIG. 16 is a bottom view. As illustrated in FIGs. 15 and 16, the angle adjustment mechanism 22 has a recessed portion 25a in the lower surface 22d. The recessed portion 25a is fitted to a guide member 25b having a columnar shape. The guide member 25b has a columnar shaft that is substantially parallel to the vertical direction, and substantially coincides with the rotation axis 2c of the angle adjustment mechanism 22.

The angle adjustment mechanism 22 swings around the rotation axis 2c (in a direction indicated by arrow 26) to swing the concave diffraction grating 2 held by the angle adjustment mechanism 22 around the rotation axis 2c.

In the present embodiment, a spectroscope 10 includes a light incidence section 1 (light incidence means) that allows light Li from an outside to be incident; a concave diffraction grating 2 (diffraction grating) that disperses wavelengths of the light Li incident on the concave diffraction grating 2 by the light incidence section 1; a movable light reflector 3 (reflecting means) having a reflecting surface 32 having an inclination variable around a rotation axis of the reflecting surface 32; and a light emitter 4 (light emitting means) that emits the light reflected by the movable light reflector 3 to the outside. At least two of positions of the light incidence section 1, the concave diffraction grating 2, the movable light reflector 3, and the light emitter 4 are changeable in a direction orthogonal to the rotation axis of the reflecting surface 32. The position of the light emitter 4 is changeable in a direction along a center axis of the light emitted from the light emitter 4. With this configuration, the positions of components in the spectroscope can be adjusted.

In the present embodiment, at least one of the positions of the light incidence section 1, the concave diffraction grating 2, the movable light reflector 3, and the light emitter 4 is adjustable in a direction orthogonal to the rotation axis of the reflecting surface 32. With this configuration, regardless of the dimensional tolerance or assembly tolerance of a component, a decrease in light intensity of emission light, a deterioration in wavelength resolution, and a deterioration in wavelength precision can be suppressed, and an individual difference in spectral performance can be reduced.

In the present embodiment, the position of the concave diffraction grating 2 may be adjustable, and based on an assumption that a direction along the rotation axis of the movable light reflector 3 is an X-axis, a direction from a center of the concave diffraction grating 2 toward a center of curvature of the concave diffraction grating 2 is a Z-axis, and an axis orthogonal to each of the X-axis and the Z-axis is a Y-axis, the position of the concave diffraction grating 2 may be adjustable in a direction along the Y-axis. With this configuration, the positions of the concave diffraction grating 2 and the light emitter 4 are adjustable, and hence the spectral performance can be stably improved.

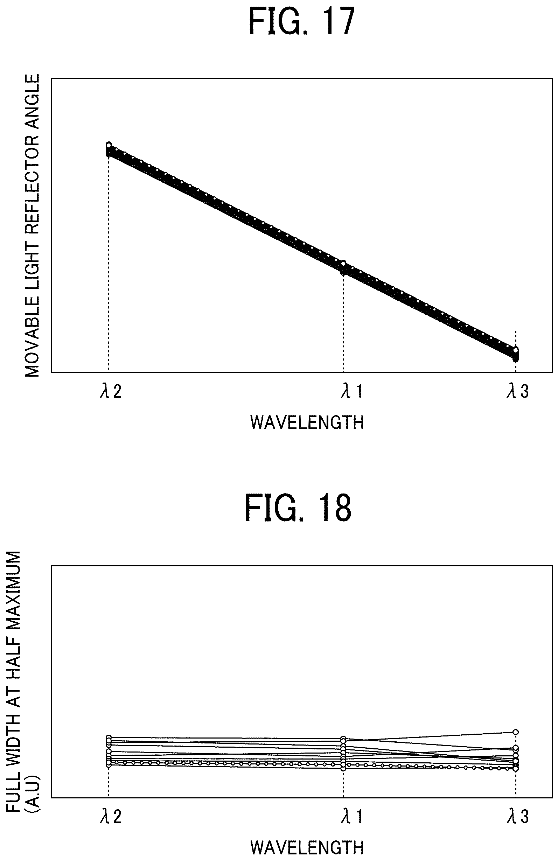

In the present embodiment, the position of the concave diffraction grating 2 may be adjusted so that the light incidence section 1 and the light emitter 4 are located on a Rowland circle formed by the concave diffraction grating 2. With this configuration, a Rowland arrangement can be provided, and the spectral performance can be increased. FIG. 17 is a graph presenting angles of the movable light reflector 3 in a case where predetermined tolerances are given to the position and posture of each of the concave diffraction grating 2, the movable light reflector 3, and the light emitter 4 and the position of the concave diffraction grating 2 is adjusted. As illustrated in FIG. 17, adjusting the position of the concave diffraction grating 2 can significantly reduce a variation in angle.

In the present embodiment, the position of the light emitter 4 may be adjustable, and based on an assumption that a direction along the rotation axis of the movable light reflector 3 is an X-axis, a direction normal to a surface of the light emitter 4 is a Z-axis, and an axis orthogonal to each of the X-axis and the Z-axis is a Y-axis, the position of the light emitter 4 may be adjustable in a direction along the Z-axis. With this configuration, the positions of the concave diffraction grating 2 and the light emitter 4 are adjustable, and hence the spectral performance can be stably improved. FIG. 18 is a graph presenting values of full width at half maximum of light illuminance when light having each of the wavelengths λ1, λ2, and λ3 passes through the second light passing portion 41 with the highest light intensity in a case where predetermined tolerances are given to the position and posture of each of the concave diffraction grating 2, the movable light reflector 3, and the light emitter 4 and the position of the light emitter 4 is adjusted. As illustrated in FIG. 18, adjusting the light emitter 4 can reduce an increase in full width at half maximum.

In the present embodiment, the position of the light emitter 4 may be adjusted so that the light incidence section 1 and the light emitter 4 have an optically conjugate relationship. With this configuration, the focus position can be aligned with the position of the second light passing portion 41, and the spectral performance can be increased.

In the present embodiment, each of the positions of the concave diffraction grating 2 and the light emitter 4 may be adjustable, and each of the concave diffraction grating 2 and the light emitter 4 may be disposed at a position at which a wavelength shift is minimized. With this configuration, it is possible to reduce the wavelength shift that is wavelength-dependent, thereby increasing the wavelength precision and increasing the spectral performance.

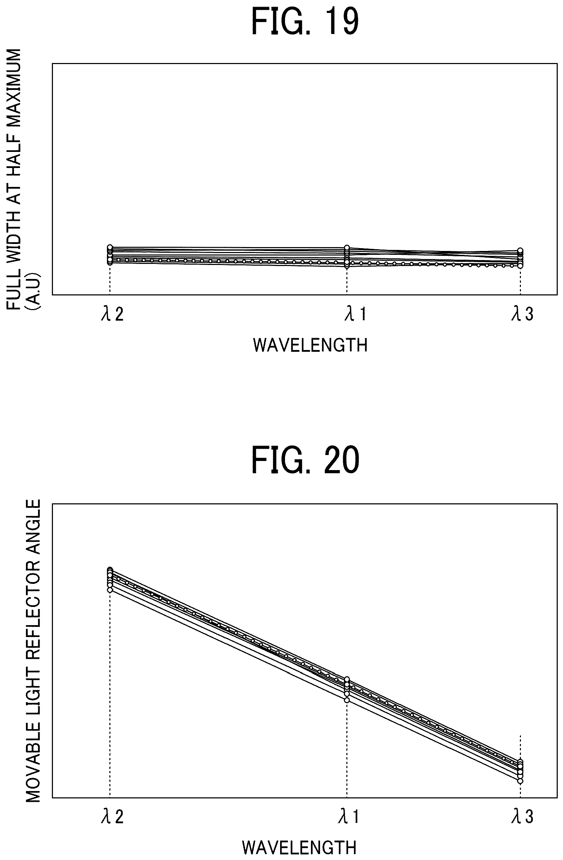

In the present embodiment, each of the positions of the concave diffraction grating 2 and the light emitter 4 may be adjustable, and each of the concave diffraction grating 2 and the light emitter 4 may be disposed at a position at which a wavelength resolution is maximized. With this configuration, the wavelength resolution is increased, and hence the spectral performance can be increased. FIG. 19 is a graph presenting values of full width at half maximum of light illuminance when light having each of the wavelengths λ1, λ2, and λ3 passes through the second light passing portion 41 with the highest light intensity in a case where predetermined tolerances are given to the position and posture of each of the concave diffraction grating 2, the movable light reflector 3, and the light emitter 4 and the positions of the concave diffraction grating 2 and the light emitter 4 are adjusted simultaneously. As illustrated in FIG. 19, adjusting the positions of the concave diffraction grating 2 and the light emitter 4 simultaneously can reduce an increase in full width at half maximum as compared to the case where the position of the light emitter 4 is adjusted.

In the present embodiment, each of the positions of the concave diffraction grating 2 and the light emitter 4 may be adjustable, and each of the concave diffraction grating 2 and the light emitter 4 may be disposed at a position at which a light intensity of light passing through the light emitter 4 is maximized. Maximizing the light intensity of light passing through the light emitter 4 can increase the SN ratio and increase the spectral performance.

In the present embodiment, at least one of postures of the light incidence section 1, the concave diffraction grating 2, and the light emitter 4 may be rotated around an axis parallel to the rotation axis of the movable light reflector 3 to adjust the at least one of the postures of the light incidence section 1, the concave diffraction grating 2, and the light emitter 4. With this configuration, regardless of the dimensional tolerance or assembly tolerance of a component, a decrease in light intensity of emission light, a deterioration in wavelength resolution, and a deterioration in wavelength precision can be suppressed, and an individual difference in spectral performance can be reduced.

In the present embodiment, the posture of the concave diffraction grating 2 may be adjustable, and the axis parallel to the rotation axis of the movable light reflector 3 may pass through a center of the concave diffraction grating 2. FIG. 20 is a graph presenting angles of the movable light reflector 3 in a case where predetermined tolerances are given to the position and posture of each of the concave diffraction grating 2, the movable light reflector 3, and the light emitter 4 and the posture of the concave diffraction grating 2 is adjusted. As illustrated in FIG. 20, adjusting the posture of the concave diffraction grating 2 can significantly reduce a variation in angle.

### Second Embodiment

An analysis system 300 including the spectroscope 10 according to the first embodiment is described next as a second embodiment. The same name and reference sign of the above-described embodiment denote members or components identical or equivalent to those of the above-described embodiment, and the detailed description thereof is appropriately omitted.

### Example of Configuration of Analysis System 300

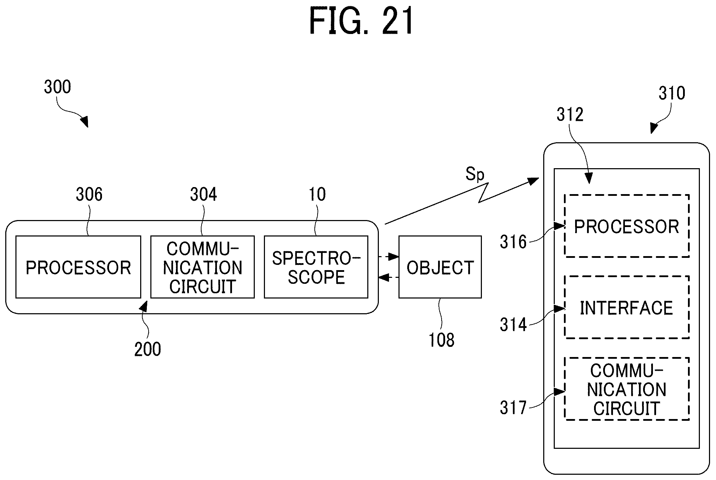

FIG. 21 illustrates an example of a general arrangement of the analysis system 300. As illustrated in FIG. 21, the analysis system 300 includes a portable apparatus 200 and a portable terminal 310. The portable apparatus 200 includes the spectroscope 10, a processor 306, and a communication circuit 304.

The analysis system 300 may have a configuration in which one spectroscope 10 is provided for one portable terminal 310, or a configuration in which a plurality of spectroscopes 10 are provided for one portable terminal 310.

The processor 306 receives an input of an electric signal that is output from the spectroscope 10, and acquires information in which a time of an optical spectrum is associated with an output including a light intensity by computation. The communication circuit 304 outputs the result obtained by the processor 306 to the portable terminal 310.

The portable terminal 310 includes an interface 314, a processor 316, and a communication circuit 317. The portable terminal 310 is, for example, a portable device such as a smartphone or a tablet terminal. The portable terminal 310 may have a camera function.

The processor 316 receives information Sp associated with the output including the time of the optical spectrum and the light intensity output from the communication circuit 304 of the portable apparatus 200 using the communication circuit 317. The processor 316 converts the time into a wavelength of light based on the received information Sp and a rotation frequency, a rotation angle amplitude, or the like, of the movable light reflector 3 included in the spectroscope 10 to obtain optical spectrum information Sq defined in relation to a light intensity on a wavelength of light basis. The processor 316 also acquires an analysis result such as a composition determination result of an object 108 by computation using the obtained optical spectrum information Sq.

The processor 316 can display the analysis result on a display 312 via the interface 314.

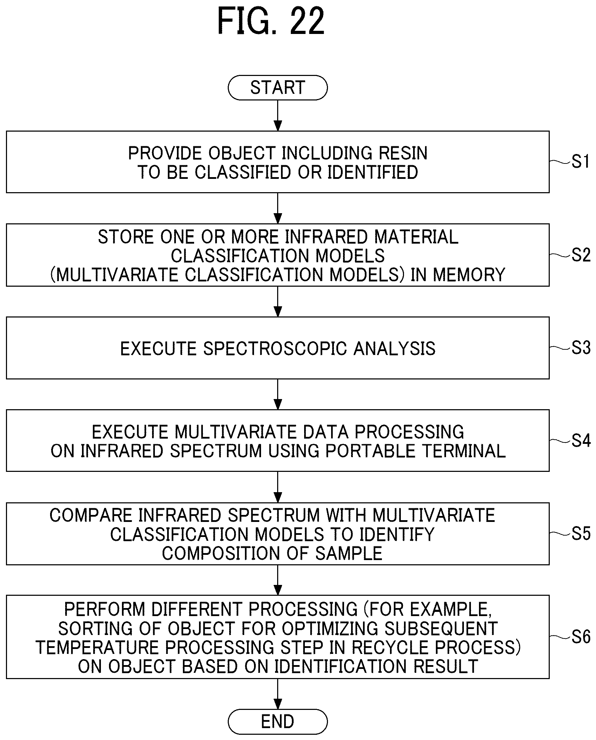

In the analysis system 300, the portable apparatus 200 transmits data to the portable terminal 310 via the communication circuit 304 using, for example, wireless serial communication such as Bluetooth^{®}. The portable terminal 310 receives data from the portable apparatus 200 and processes and analyzes the data using the processor 316. The analysis system 300 causes the display 312 to display, for example, the optical spectrum information Sq and the composition determination result, which are the analysis result. Example of Operation of Analysis System 300
FIG. 22 is a flowchart presenting an example of a resin determination operation when the analysis system 300 is applied to a resin determination apparatus.

In step S1, the analysis system 300 provides an object including a resin to be classified or identified.

In step S2, the analysis system 300 stores one or more infrared material classification models (multivariate classification models) in a memory.

In step S3, the analysis system 300 executes spectroscopic analysis on the object 108 to collect raw infrared spectrum data.

In step S4, the analysis system 300 executes multivariate processing on the raw infrared spectrum data using the processor 316 of the portable terminal 310.

In step S5, the analysis system 300 uses the processor 316 of the portable terminal 310 to identify the composition of a sample as a resin-based composite material of a specific type (corresponding to the material model).

In step S6, the analysis system 300 further processes the object 108 (for example, stores the object 108 in a proper location for a further recycle step). The analysis system 300 can repeat each processing from step S1 to step S6 for an object 108 including another resin in step S3.

For example, the analysis system 300 uses a classification model to identify the composition of the object 108 including a resin, and determines a resin that a sample including a specific resin may include. For example, determining a resin using the analysis system 300 can optimize processing conditions of a process such as optimizing processing conditions of a furnace to be used for material processing in the recycle of the object 108 including the resin.

Moreover, processing of registering known material data before execution of the spectroscopic analysis in the operation in FIG. 22 can be added. With this processing, the precision of the analysis result of the object 108 can be increased. As described above, the analysis system 300 can determine a resin with high reliability.

For example, the spectroscope 10 according to the embodiment may be used for an analysis apparatus. For example, such an analysis apparatus is used to identify the type of resin or the like of an object by spectroscopic analysis on the spectrum obtained by the spectroscope 10, and to sort and recover the object for each type of resin as a recycled material. Since the analysis apparatus includes the spectroscope 10, highly precise analysis in which the influence of stray light is reduced can be performed, and the analysis apparatus can be downsized.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A spectroscope comprising:
light incidence means (1) comprising a first light passing portion (11) configured to allow light from an outside to be incident on the spectroscope and a first light non-passing portion (12) configured to not allow the light to pass to the spectroscope;
a reflective concave diffraction grating (2) configured to disperse wavelengths of the light incident on the diffraction grating (2) by the light incidence means (1);
reflecting means (3) configured to receive the wavelength dispersed light from the diffraction grating (2) having a reflecting surface having an inclination variable around a rotation axis of the reflecting surface; and
light emitting means (4) comprising a second light passing portion (41) configured to emit the light reflected by the reflecting means (3) to the outside and a second light non-passing portion (42) configured to not allow the light reflected by the reflecting means (3) to pass to the outside,
wherein the position of the light emitting means (4) is changeable in a direction (81) along a center axis of the light emitted from the light emitting means (4),
wherein the position of the light emitting means (4) is adjustable so that the light incidence means (1) and the light emitting means (4) have an optically conjugate relationship,
wherein the light incidence means (1) and the concave diffraction grating are arranged on a Rowland circle,
**characterized in that**
the position of the concave diffraction grating is changeable in a tangential direction (82) of the Rowland circle at the position at which the concave diffraction grating is disposed.

2. The spectroscope according to claim 1,
wherein the diffraction grating (2) includes a plurality of gratings arranged in a predetermined direction.

3. The spectroscope according to any one of claims 1 to 3, wherein the position of the light emitting means (4) is changeable so that a focus position of the light to be emitted from the light emitting means (4) overlaps a position at which the light to be emitted from the light emitting means (4) passes through the light emitting means (4).

4. The spectroscope according to any one of claims 1 to 3, wherein, in a case that each of the positions of the diffraction grating (2) and the light emitting means (4) is changed, a wavelength shift of the light emitted from the light emitting means (4) is minimized.

5. An analysis system comprising:
the spectroscope (10) according to any one of claims 1 to 6; and
a processor (316) configured to analyze a spectrum obtained by the spectroscope (10).

## Patentansprüche

1. Spektroskop, umfassend:
Lichteinfallsmittel (1) mit einem ersten lichtdurchlässigen Abschnitt (11), der so konfiguriert ist, dass er Licht von außen auf das Spektroskop einfallen lässt, und einem ersten lichtundurchlässigen Abschnitt (12), der so konfiguriert ist, dass er das Licht nicht zu dem Spektroskop durchlässt;
ein reflektierendes konkaves Beugungsgitter (2), das so konfiguriert ist, dass es die Wellenlängen des von den Lichteinfallsmitteln (1) auf das Beugungsgitter (2) einfallenden Lichts streut;
eine Reflexionseinrichtung (3), die so konfiguriert ist, dass sie das in der Wellenlänge gestreute Licht von dem Beugungsgitter (2) empfängt, das eine reflektierende Oberfläche mit einer um eine Drehachse der reflektierenden Oberfläche variablen Neigung aufweist; und
eine lichtemittierende Einrichtung (4), die einen zweiten lichtdurchlässigen Abschnitt (41), der so konfiguriert ist, dass er das von der reflektierenden Einrichtung (3) reflektierte Licht nach außen abgibt, und einen zweiten lichtundurchlässigen Abschnitt (42) umfasst, der so konfiguriert ist, dass er das von der reflektierenden Einrichtung (3) reflektierte Licht nicht nach außen durchlässt,
wobei die Position des lichtemittierenden Mittels (4) in einer Richtung (81) entlang einer Mittelachse des von dem lichtemittierenden Mittel (4) emittierten Lichts veränderbar ist,
wobei die Position des lichtemittierenden Mittels (4) einstellbar ist, so dass das Lichteinfallsmittel (1) und das lichtemittierende Mittel (4) eine optisch konjugierte Beziehung haben,
wobei das Lichteinfallsmittel (1) und das konkave Beugungsgitter auf einem Rowland-Kreis angeordnet sind,
**dadurch gekennzeichnet, dass**
die Position des konkaven Beugungsgitters in einer tangentialen Richtung (82) des Rowland-Kreises an der Position, an der das konkave Beugungsgitter angeordnet ist, veränderbar ist.

2. Spektroskop nach Anspruch 1,
wobei das Beugungsgitter (2) eine Vielzahl von Gittern enthält, die in einer vorgegebenen Richtung angeordnet sind.

3. Spektroskop nach einem der Ansprüche 1 bis 3, wobei die Position der Lichtemissionseinrichtung (4) so veränderbar ist, dass eine Fokusposition des von der Lichtemissionseinrichtung (4) zu emittierenden Lichts eine Position überlappt, an der das von der Lichtemissionseinrichtung (4) zu emittierende Licht die Lichtemissionseinrichtung (4) durchläuft.

4. Spektroskop nach einem der Ansprüche 1 bis 3, wobei in dem Fall, dass jede der Positionen des Beugungsgitters (2) und des lichtemittierenden Mittels (4) verändert wird, eine Wellenlängenverschiebung des von dem lichtemittierenden Mittel (4) emittierten Lichts minimiert wird.

5. Analysesystem, umfassend:
das Spektroskop (10) nach einem der Ansprüche 1 bis 6; und
einen Prozessor (316), der so konfiguriert ist, dass er ein durch das Spektroskop (10) erhaltenes Spektrum analysiert.

## Revendications

1. Spectroscope comprenant :
un moyen d'incidence de lumière (1) comprenant une première portion de passage de lumière (11) conçue pour permettre à la lumière provenant de l'extérieur d'être incidente sur le spectroscope et une première portion de non-passage de lumière (12) conçue pour ne pas permettre à la lumière de passer vers le spectroscope,
un réseau de diffraction concave réfléchissant (2) conçu pour disperser des longueurs d'onde de la lumière incidente sur le réseau de diffraction (2) à l'aide du moyen d'incidence de lumière (1),
un moyen de réflexion (3) conçu pour recevoir, en provenance du réseau de diffraction (2), la longueur d'onde de lumière dispersée, et présentant une surface réfléchissante dont l'inclinaison varie sur un axe de rotation de la surface réfléchissante, et
un moyen d'émission de lumière (4) comprenant une deuxième portion de passage de lumière (41), conçue pour émettre vers l'extérieur la lumière réfléchie par le moyen de réflexion (3), et une deuxième portion de non-passage de lumière (42) conçue pour ne pas permettre à la lumière réfléchie par le moyen de réflexion (3) de passer vers l'extérieur ;
la position du moyen d'émission de lumière (4) pouvant être modifiée dans une direction (81) le long d'un axe central de la lumière émise par le moyen d'émission de lumière (4),
la position du moyen d'émission de lumière (4) pouvant être réglée de manière à ce que le moyen d'incidence de lumière (1) et le moyen d'émission de lumière (4) présentent une relation optiquement conjuguée,
le moyen d'incidence de lumière (1) et le réseau de diffraction concave étant agencés sur un cercle de Rowland ;
**caractérisé en ce que**
la position du réseau de diffraction concave peut être modifiée dans une direction tangentielle (82) du cercle de Rowland à la position à laquelle le réseau de diffraction concave est disposé.

2. Spectroscope selon la revendication 1,
dans lequel le réseau de diffraction (2) comprend une pluralité de réseaux agencés dans une direction prédéterminée.

3. Spectroscope selon l'une quelconque des revendications 1 à 3, dans lequel la position du moyen d'émission de lumière (4) peut être modifiée de manière à ce qu'une position de focalisation de la lumière à émettre par le moyen d'émission de lumière (4) chevauche une position à laquelle la lumière à émettre par le moyen d'émission de lumière (4) passe à travers le moyen d'émission de lumière (4).

4. Spectroscope selon l'une quelconque des revendications 1 à 3, dans lequel, dans le cas où chacune des positions du réseau de diffraction (2) et du moyen d'émission de lumière (4) est modifiée, un décalage de longueur d'onde de la lumière émise par le moyen d'émission de lumière (4) est réduit.

5. Système d'analyse comprenant :
le spectroscope (10) selon l'une quelconque des revendications 1 à 6, et
un processeur (316) conçu pour analyser un spectre obtenu par le spectroscope (10).
